# EUROPÄISCHE PATENTANMELDUNG

(11) **EP 1 189 189 A1**
(43) Veröffentlichungstag der Anmeldung: **20.03.2002**
(21) Anmeldenummer: 00123814.6
(22) Anmeldetag: 02.11.2000
(51) Int. Cl.: G09F 3/20, G09F 27/00

(54) **Anordnung zur Darstellung von Bildern und Regalboden**

(30) Priorität: 16.09.2000 DE 20016116 U
(71) Anmelder: Firma VKF Renzel GmbH, 46419 Isselburg (DE)
(72) Erfinder: Renzel, Heinz, 46399 Bocholt (DE)
(74) Vertreter: Habbel, Ludwig (Lutz), Dipl.-Ing.

(57) **Zusammenfassung**

Die Erfindung bezieht sich auf eine Anordnung zur Darstellung von Filmen, mit einem Bilder enthaltenden Datenspeicher (6), und mit einer Anzeigefläche (8) zur Darstellung der Filme, und mit einem Barcode-Lesegerät (7), und mit einer Schaltung, die bei Erfassung eines Barcodes durch das Barcode-Lesegerät einen dem Barcode zugeordneten Film aus dem Bildspeicher abruft und auf der Anzeigefläche anzeigt.

## Beschreibung

Die Erfindung betrifft eine Anordnung zur Darstellung von Filmen sowie einen Regalboden für Warenhäuser.

Es ist aus der Praxis bekannt, bei Warenhauseinrichtungen Anzeigenflächen für wechselnde Darstellungen zu verwenden. So können beispielsweise wochentagabhängig oder tageszeitabhängig auf Displays unterschiedliche Preise für dasselbe Produkt angezeigt werden. Die Steuerung erfolgt dabei entweder automatisch mittels einer entsprechenden uhrzeit-bzw. datumserkennenden Schaltung, oder die unterschiedliche Anzeige der Preise kann manuell durch das Personal des Warenhauses ausgelöst werden.

Der Erfindung liegt die Aufgabe zugrunde eine Anordnung zur Darstellung von Filmen sowie einen Regalboden zu schaffen, der kundenorientiert die Darstellung von Informationen ermöglicht, welche der Kunde wünscht.

Diese Aufgabe wird durch eine Anordnung mit den Merkmalen des Anspruchs 1 und durch ein Regalboden mit den Merkmalen des Anspruchs 3 gelöst.

Die Erfindung schlägt mit anderen Worten vor, einen Barcode-Scanner zu verwenden, sodass der Kunde einzelne Gegenstände mit dem Barcode-Scanner erfassen kann, wobei anschließend die diesen Produkten zugeordneten Filme auf der Anzeigenfläche wiedergegeben werden, z. B. ein Film mit Produkthinweisen, Verarbeitungshinweisen o. dgl. Besonders vorteilhaft können derartige visuelle Darstellungen durch akustische Hinweise wie beispielsweise erläuternde, gesprochene Texte o. dgl. ergänzt werden.

Besonders vorteilhaft kann eine neuerungsgemäße Anordnung in einem Regalboden integriert sein. Auf diese Weise ergibt sich für den Warenhausbetreiber eine besonders einfache Installation, bei der beispielsweise lediglich ein Stromanschluss bereitgestellt werden muss. Eine derartige Anordnung innerhalb eines Regalbodens kann besonders vorteilhaft ein Gehäuse aufweisen, in dem die einzelnen Komponenten der Anordnung zusammengefasst sind, sodass lediglich dieses separate Gehäuse an dem eigentlichen Regalboden festgelegt werden muss. Auf diese Weise kann bei Verwendung standardisierter Regalböden wahlweise bei einzelnen dieser Böden die neuerungsgemäße Anordnung angebracht werden und je nach Bedarf von einem zu einem anderen Regalboden umgesetzt werden.

Ein weiterer Vorteil der in einem Regalboden zusammengefassten Anordnung besteht in einer besonders einfachen Handhabung für den Kunden, da keine separat handzuhabenden Geräte, wie beispielsweise der Barcodeleser, vorhanden sind. Vielmehr ist der Barcodeleser in dem Regalboden angeordnet, sodass der Kunde das Produkt lediglich vor ein entsprechendes Fenster dieses Regalbodens halten muss, um die Erfassung durch den Barcodeleser auszulösen und damit die Anzeige auf der Anzeigenfläche auszulösen.

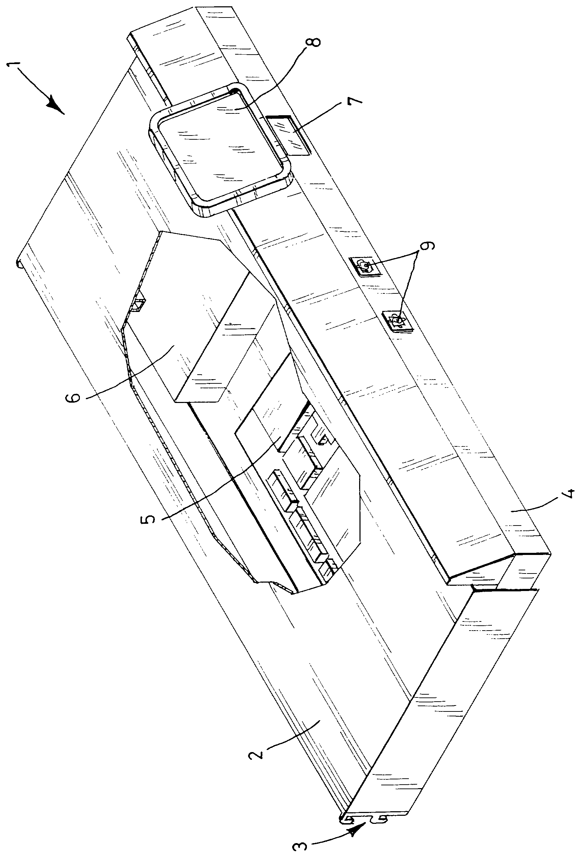

Ein Ausführungsbeispiel der Erfindung wird anhand der Zeichnung im Folgenden näher erläutert.

Dabei ist mit 1 allgemein ein Regalboden bezeichnet, der im wesentlichen zwei Komponenten enthält: Zunächst ein Grundelement 2, welches über entsprechende Befestigungsmittel 3 an handelsüblichen Regalschienen befestigt werden kann. Als zweite Komponente umfasst der Regalboden 1 einen Einschub 4, der in das Grundelement 2 eingeschoben werden kann und der eine Anordnung zur Darstellung von Filmen enthält. Diese Anordnung weist eine Tastatur 5 auf zur Steuerung und Programmierung der Anordnung. Weiterhin umfasst die Anordnung einen Datenspeicher, beispielsweise in Form der Festplatte eines Rechners 6, wobei der Datenspeicher außer den Filmen auch eine Vergleichstabelle enthält mit Einträgen, welchem Produkt welches Bild bzw. Film zugeordnet ist. Das Produkt wird anhand von Barcodes identifiziert,die über einen Barcode-Scanner eingelesen werden, wobei dieser Scanner hinter einem Fenster 7 im Einschub 4 angeordnet ist und daher vom Benutzer nicht als separates Element eigens gehandhabt und bedient werden muss.

Das anhand des Barcodes identifizierte Produkt wird im Rechner 6 einem bestimmten Film zugeordnet und diese Bilder werden dann auf einer Anzeigefläche 8 angezeigt, die beispielsweise als LC-Display ausgestaltet sein kann. Ergänzende akustische Informationen können ebenfalls im Rechner 6 gespeichert sein und über Lautsprecher 9 wiedergegeben werden.

Die im Rechner 6 befindliche Steuerung der gesamten Anordnung kann vorsehen, dass bei Einlesen eines neuen Barcodes ein ggf. momentan laufender Abspielvorgang von Bildern und ggf. Klängen abgebrochen wird, und dass der Abspielvorgang gestartet wird, der dem Barcode zugeordnet ist, welcher soeben eingelesen wurde. Weitere Bedienungselemente außer den für den Käufer wichtigen Elementen wie Anzeigefläche 8, Barcode-Scanner und Lautsprecher 9 sind an der Vorderseite des Regalbodens 8 bzw. des Einschubes 4 nicht vorgesehen. Zum Zugriff auf den Rechner 6 beispielsweise zum Einspielen neuer Daten in den Rechner 6 kann der Einschub 4 aus dem Grundelement 2 herausgezogen werden, sodass die Tastatur 5 zugänglich ist und der Rechner 6 entsprechend gesteuert bzw. programmiert werden kann.

Bei der Anordnung kann die Wiedergabe entweder nur von Filmen vorgesehen sein oder auch eine kombinierte Wiedergabe mit zusätzlichen Preisinformationen. Über die Tastatur 5 oder auch ggf. im Rahmen einer Fernwartung kann das Personal des Warenhauses auf den Rechner 6 zugreifen und gezielt diese Informationen verändern, d. h. einem bestimmten Produkt neue Bilder zuordnen oder auch, bei gleichbleibenden Filmen, lediglich diesem Produkt neue Preise zuordnen.

Durch das Einspielen neuer Fotos bzw. Filme in den Rechner 6 und insbesondere durch Ergänzung der Vergleichstabelle mit neuen Barcode-Informationen können zusätzliche Produkte in das System aufgenommen werden, sodass die Kunden auch zu derartig neu hinzugekommenen Produkten entsprechende Informationen aus dem System abrufen können.

## Patentansprüche

1. Anordnung zur Darstellung von Filmen,
mit einem Bilder enthaltenden Datenspeicher,
und mit einer Anzeigefläche (8) zur Darstellung der Filme,
und mit einem Barcode-Lesegerät,
und mit einer Schaltung, die bei Erfassung eines Barcodes durch das Barcode-Lesegerät einen dem Barcode zugeordneten Film aus dem Bildspeicher abruft und auf der Anzeigefläche (8) anzeigt.

2. Anordnung nach Anspruch 1, **gekennzeichnet durch** Lautsprecher (9), wobei dem Film Geräusche zugeordnet sind, die während der Darstellung der Bilder wiedergegeben werden.

3. Regalboden (1) für Warenhäuser, wobei der Regalboden (1) mit einer Anordnung nach Anspruch 1 oder 2 versehen ist.

4. Regalboden nach Anspruch 3, **dadurch gekennzeichnet, dass** die Anordnung in einem Gehäuse angeordnet ist, welches von dem Regalboden (1) lösbar oder den Zugriff auf die Anordnung ermöglichend gegenüber dem Regalboden beweglich ist.
